# EUROPEAN PATENT SPECIFICATION

(11) **EP 3 496 857 B1**
(45) Date of publication and mention of the grant of the patent: **28.02.2024**
(21) Application number: 17752436.0
(22) Date of filing: 04.08.2017
(51) Int. Cl.: B01J 37/03, B01J 35/00, B01J 21/06, B01J 23/44, B01J 23/72, B01J 35/02, B01J 35/04, B01J 35/10, F01N 3/035

(54) **EXHAUST SYSTEM FOR A COMPRESSION IGNITION ENGINE HAVING A CAPTURE REGION FOR A VOLATILISED PLATINUM**
ABGASSYSTEM FÜR EINEN KOMPRESSIONSZÜNDUNGSMOTOR MIT EINEM SAMMELBEREICH FÜR VERFLÜCHTIGTES PLATIN
SYSTÈME D'ÉCHAPPEMENT POUR MOTEUR DIESEL AYANT UNE RÉGION DE CAPTURE POUR LE PLATINE VOLATILISÉ

(30) Priority: 12.08.2016 GB 201613849
(43) Date of publication of application: 19.06.2019
(73) Proprietor: Johnson Matthey Public Limited Company, London EC4A 4AB (GB)
(72) Inventor: BIDAL, Yannick, Royston Hertfordshire SG8 5HE (GB); CHIFFEY, Andrew, Royston Hertfordshire SG8 5HE (GB); MOREAU, Francois, Royston Hertfordshire SG8 5HE (GB)
(74) Representative: Nunn, Andrew Dominic
(86) International application number: PCT/GB2017/052297
(87) International publication number: WO 2018/029448

(56) References cited:
- WO-A1-2008/088649
- WO-A1-2016/128720
- WO-A1-2016/146966
- US-A1- 2013 302 214

## Description

### FIELD OF THE INVENTION

The invention relates to an exhaust system for treating an exhaust gas produced by a compression ignition engine comprising an oxidation catalyst and a capture zone for capturing volatilised platinum.

### BACKGROUND TO THE INVENTION

Compression ignition engines produce an exhaust gas that contains a variety of pollutants that are the subject of environmental legislation around the world. These pollutants include carbon monoxide (CO), unburned hydrocarbons (HCs), oxides of nitrogen (NOₓ) and particulate matter (PM).

To meet permissible levels of pollutants that may be emitted into the atmosphere set by legislation, exhaust systems for treating the exhaust gas produced by a compression ignition generally contain several emissions control devices. In such exhaust systems, the exhaust gas is usually conducted to a first emissions control device that is able to oxidise carbon monoxide (CO) and the unburned hydrocarbons (HCs) that are present in the gas. The first emissions control device may, for example, be a diesel oxidation catalyst (DOC), a catalysed soot filter (CSF), a NOₓ storage catalyst (NSC), a passive NOₓ adsorber (PNA), a diesel exotherm catalyst (DEC), or a cold start concept (CSC^{™}) catalyst.

For NOₓ emissions, exhaust systems for compression ignition engines may contain a catalyst for the selective catalytic reduction of NOₓ, such as selective catalytic reduction (SCR) catalyst or selective catalytic reduction filter (SCRF^{™}) catalyst. The selective catalytic reduction (SCR) of NOₓ primarily occurs by the following three reactions:
(1)

   4NH₃ + 4NO + O₂ → 4N₂ + 6H₂O;
(2)

   4NH₃ + 2NO + 2NO₂ → 4N₂ + 6H₂O;

   and
(3)

   8NH₃ + 6NO → 7N₂ + 12H₂O.

The ratio of NO₂:NO in the exhaust gas that enters an SCR catalyst or SCRF^{™} catalyst can affect its performance. In general, SCR catalysts or SCRF^{™} catalysts show optimum performance when the ratio of NO₂:NO is about 1:1. This can be problematic because the exhaust gas produced by a compression ignition engine during normal use typically contains insufficient NO₂ (i.e. the ratio of NO₂:NO is much lower than 1:1) for optimal performance of the SCR catalyst or the SCRF^{™} catalyst. To compensate for such low levels of NO₂, the first emissions control device often contains a catalytic material that has been formulated to oxidise nitrogen monoxide (NO) to nitrogen dioxide (NO₂), thereby increasing the ratio of NO₂:NO in the exhaust gas. The SCR catalyst or SCRF^{™} catalyst is usually arranged downstream of the first emissions control device in an exhaust system, so that the exhaust gas will pass through the first emissions control device before passing through the SCR catalyst or SCRF^{™} catalyst.

The catalytic material for oxidising NO to NO₂ typically comprises platinum (Pt). When the first emissions control device is exposed to relatively high temperatures for a sufficient period of time, low levels of platinum (Pt) may volatilise from the catalytic material and can become trapped on the SCR/SCRF^{™} catalyst. Such relatively high temperatures may occur during normal use, especially in heavy duty diesel applications, or during filter regeneration, such as when the first emissions control device is a CSF or when there is an upstream diesel particulate filter (DPF). Pt trapped on the SCR catalyst or the SCRF^{™} catalyst can have a highly detrimental effect on the catalyst's performance because it can oxidise ammonia (NH₃). The trapped Pt can consume the NH₃ that is intended for the selective catalytic reduction of NOₓ (thereby decreasing NOₓ conversion) and undesirable, secondary emissions may be produced.

The problem of Pt volatilisation is discussed in our publications WO 2013/088133,

WO 2013/088132, WO 2013/088128, WO 2013/050784 and International patent application no. PCT/GB2016/050285. US 2013/302214 A1 deals with the problem of capturing volatilized platinum from the upstream platinum containing catalyst and protection of the downstream emissions control device in an exhaust system for a compression ignition engine.

### SUMMARY OF THE INVENTION

The invention provides an exhaust system for treating an exhaust gas produced by a compression ignition engine, wherein the exhaust system comprises an oxidation catalyst comprising: a substrate which is a flow-through monolith substrate having an inlet end surface and an outlet end surface; a catalytic material disposed on the substrate, wherein the catalytic material comprises platinum (Pt); a capture zone comprising a capture material, wherein the capture material comprises a Pt-alloying metal, which is palladium (Pd), disposed or supported on a refractory oxide, which capture material is disposed or supported on a plurality of channel walls within the substrate, wherein the refractory oxide comprises particles thereof having a mean specific surface area ≥ 50 m²/g of at least 65 % by weight of zirconia and less than 20 % by weight of ceria, wherein the mean specific surface area is determined by nitrogen physisorption at -196°C using the volumetric method and using the BET adsorption isotherm equation, wherein the capture zone has a mean length of ≤ 20 mm and 10 to 30% of the length of the substrate, is disposed on the outlet end surface of the substrate and is arranged to contact the exhaust gas after the exhaust gas has contacted and/or passed through the catalytic material comprising Pt; and an emissions control device disposed downstream from the oxidation catalyst, which emissions control device is a selective catalytic reduction (SCR) catalyst or a SCR filter catalyst.

The capture zone comprising a capture material is a zone for capturing volatilised platinum (Pt). After exhaust gas has been contacted with and/or passed through the catalytic material, the exhaust gas may contain volatilised Pt, especially when the exhaust gas is relatively hot, such as when the engine has been operated under a heavy load for a prolonged period of time or when the engine is a heavy-duty engine. The zone is arranged to contact the exhaust gas after the exhaust gas has contacted or passed through the catalytic material.

Materials in the art that have been found to be effective at capturing volatilised Pt can lower the amount of NO₂ (and also the ratio of NO₂:NO), particularly in the temperature region of the downstream emissions control device that is sensitive to the ratio of NO₂:NO, resulting in a potential reduction in the performance of the downstream device, especially when it is a SCR catalyst or a SCRF^{™} catalyst. Existing capture materials may negate the benefit of any Pt that is included in the catalytic material of an emissions control device for the generation of NO₂.

The inventors have developed a capture material for trapping volatilised Pt that does not affect (i.e. decrease) the amount of NO₂ (e.g. the ratio of NO₂:NO) in an exhaust gas. The capture material will not reduce the amount of any NO₂ produced from the oxidation of NO by Pt in the catalytic material of the oxidation catalyst. Exhaust gas that has passed though both the catalytic material of the oxidation catalyst and the capture material will consequently contain a higher ratio of NO₂:NO compared to the exhaust gas that was initially produced by the compression ignition engine, so that optimal performance of a downstream SCR/SCRF^{™} catalyst can be obtained.

Some capture materials for trapping volatilised Pt are described in our International patent application no. PCT/GB2016/050285. These capture materials contain at least one of (a) relatively large particles of a Pt-alloying metal (e.g. having a mean particle size ≥ about 10 nm and/or a dispersion of ≤ about 10 %) and (b) particles of a refractory oxide having a low surface area (e.g. a mean specific surface area ≤ about 50 m²/g). To manufacture a capture material having the desired properties, it is convenient to thermally treat the refractory oxide and/or the Pt-alloying metal and to then isolate the resulting material as a powder. A zone comprising the capture material can then be formed on the oxidation catalyst using conventional washcoat techniques, where the washcoat is formed by dissolving or dispersing the powder in a solution. A disadvantage of this manufacturing method is that it is time consuming and costly.

The capture material for use in the exhaust system of the invention can be manufactured in a simple, cost-effective process. The capture material is typically formed *in situ* from one or more salts of the Pt-alloying metal and the refractory oxide during the preparation of a washcoat. The refractory oxide and the Pt-alloying metal salts are typically dispersed in a washcoat, which is then coated onto and adheres to a surface of the substrate. The coated substrate is usually then dried and calcined, which converts the Pt-alloying metal salts into a Pt-alloying metal or an oxide thereof and fixes it onto a surface of the refractory oxide.

The zone comprising the capture material is arranged to contact exhaust gas after the exhaust gas has contacted and/or passed through the catalytic material. The zone for capturing volatilised platinum (Pt) may be an integral part of the oxidation catalyst.

Generally, volatilised platinum may be present in an exhaust gas (i.e. in an exhaust system) when the temperature of the exhaust gas is ≥ 700 °C, such as ≥ 800 °C, preferably ≥ 900 °C.

### BRIEF DESCRIPTION OF THE DRAWINGS

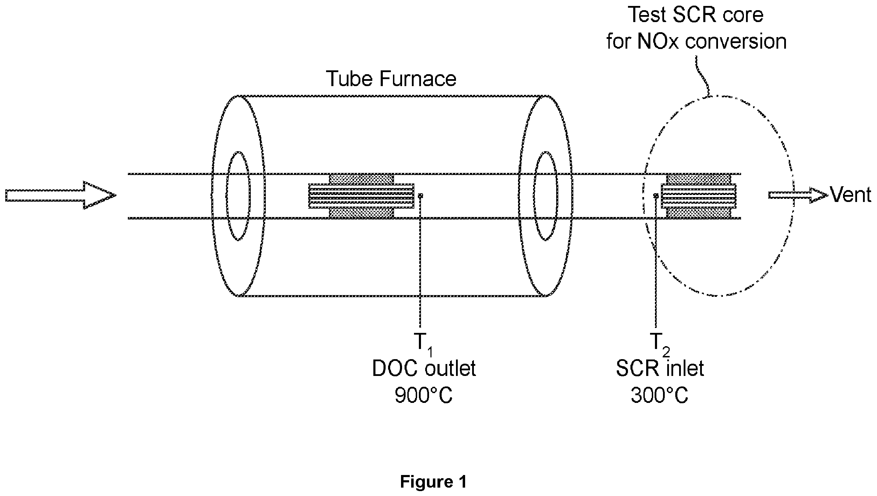

Figure 1 is a schematic drawing of a laboratory reactor used for testing platinum contamination on a Cu/CHA zeolite SCR catalyst.

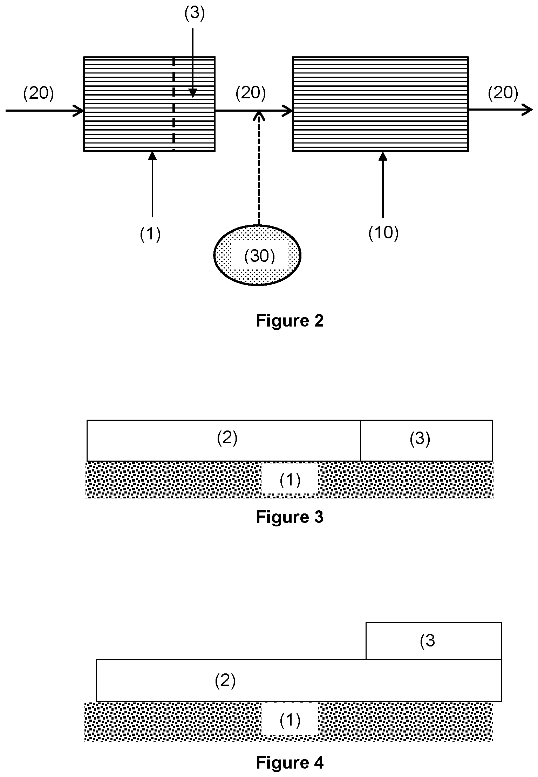

Figure 2 is a schematic drawing showing an exhaust system embodiment of the invention. Exhaust gas (20) passes through an oxidation catalyst (1) of the invention, which has a capture zone (3). After exhaust gas (20) has passed through the oxidation catalyst (1), it passes through a second emissions control device (10), such as a selective catalytic reduction (SCR) catalyst or a selective catalytic reduction filter (SCRF^{™}) catalyst. If SCR is to be performed actively, then a source of ammonia (30) may be introduced into the exhaust gas. For passive SCR, the source of ammonia (30) may not be present.
Figure 3 is a schematic drawing of an oxidation catalyst of the invention. The oxidation catalyst has a region or zone (2) disposed on a substrate (1), which comprises a catalytic material containing Pt. There is capture zone (3) at the outlet end of the oxidation catalyst, which capture zone comprises a capture material for capturing volatilised Pt.
Figure 4 is a schematic drawing of an oxidation catalyst of the invention. The oxidation catalyst has a layer (2) disposed on a substrate (1), which layer comprises a catalytic material containing Pt. There is capture zone (3) at the outlet end of the oxidation catalyst that is disposed on the layer (2) of catalytic material. The capture zone (3) comprises a capture material for capturing volatilised Pt.

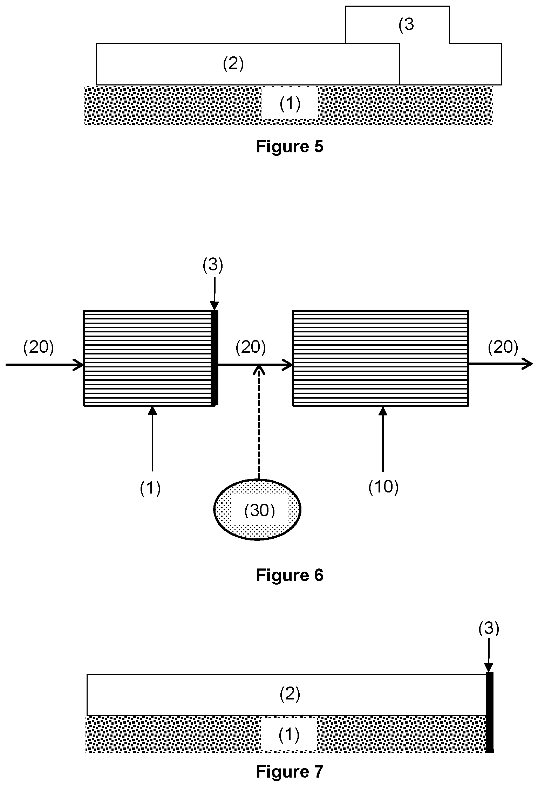

Figure 5 is a schematic drawing of an oxidation catalyst of the invention. The oxidation catalyst has a region or zone (2) disposed on a substrate, which region or zone comprises a catalytic material containing Pt. There is capture zone (3) at the outlet end of the oxidation catalyst. The capture zone (3) overlaps the region or zone (2) containing the catalytic material. The capture zone (3) comprises a capture material for capturing volatilised Pt.
Figure 6 is a schematic drawing showing an exhaust system embodiment of the invention. Exhaust gas (20) passes through an oxidation catalyst (1) of the invention, which has a capture material (3) disposed at an outlet end surface of the substrate. After exhaust gas (20) has passed through the oxidation catalyst (1), it passes through a second emissions control device (10), such as a selective catalytic reduction (SCR) catalyst or a selective catalytic reduction filter (SCRF^{™}) catalyst. If SCR is to be performed actively, then a source of ammonia (30) may be introduced into the exhaust gas. For passive SCR, the source of ammonia (30) may not be present.
Figure 7 is a schematic drawing of an oxidation catalyst of the invention. The oxidation catalyst has a catalytic material (2) disposed on a substrate (1). There is a capture material (3) disposed or supported at an outlet end surface of the substrate.

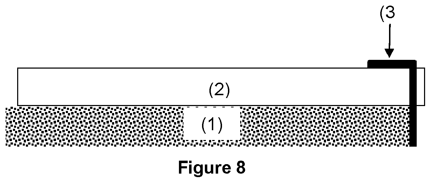

Figure 8 is a schematic drawing of an oxidation catalyst of the invention. The oxidation catalyst has a catalytic material (2) disposed on a substrate (1). There is a capture material (3) disposed or supported at an outlet end surface of the substrate, which partially overlies the catalytic material (2).

### DETAILED DESCRIPTION OF THE INVENTION

The invention relates to a zone for capturing volatilised platinum (Pt), which comprises, or consists essentially of, a capture material. The zone can be arranged in a variety of ways to trap or capture volatilised Pt in an exhaust gas that has passed through an upstream catalytic material, typically of an oxidation catalyst. The zone is arranged to prevent the volatilised Pt from condensing on a second, downstream emissions control device, such as a SCR catalyst or SCRF^{™} catalyst.

The capture material comprises, or consists essentially of, a Pt-alloying metal disposed or supported on a refractory oxide, wherein the refractory oxide comprises particles thereof having a mean specific surface area ≥ 50 m²/g of at least 65 % by weight of zirconia and less than 20 % by weight of ceria, wherein the mean specific surface area is determined by nitrogen physisorption at -196°C using the volumetric method and using the BET adsorption isotherm equation.

The inventors have found that the use of the described capture material in accordance with the invention can reduce or prevent volatilised Pt from becoming deposited on a downstream SCR catalyst or SCRF^{™} catalyst when the capture material is arranged within the exhaust system in an appropriate manner. The capture material of the invention has low catalytic activity, particularly toward the oxidation of CO and/or unburned HCs, and especially toward the oxidation of NOₓ. In general, the capture material is also substantially catalytically inactive toward the degradation or reduction of NO₂, particularly under the conditions at which Pt volatilisation occurs and/or in the temperature region at which a downstream SCR catalyst or SCRF^{™} catalyst is sensitive to the ratio of NO₂:NO.

Typically, the zone for capturing volatilised platinum (Pt) or the capture material thereof comprises a loading of the refractory oxide of 6.10 to 213.6 g/L (0.1 to 3.5 g in⁻³), preferably 12.2 to 152.6 g/L (0.2 to 2.5 g in⁻³0, still more preferably 18.3 to 122.1 g/L (0.3 to 2.0 g in⁻³), and even more preferably 30.5 to 106.8 g/L (0.5 to 1.75 g in⁻³) (e.g. 45.8 to 91.5 g/L (0.75 to 1.5 g in⁻³)).

The capture material comprises particles of a refractory oxide typically having a mean specific surface area > about 50 m²/g, such as ≥ about 60 m²/g (> about 60 m²/g), preferably ≥ about 75 m²/g (> about 75 m²/g), more preferably ≥ about 90 m²/g (> about 90 m²/g), even more preferably ≥ about 100 m²/g (> about 100 m²/g).

The mean specific surface area (SSA) of the particles of the refractory oxide is determined by nitrogen physisorption at -196°C using the volumetric method. The mean SSA is determined using the BET adsorption isotherm equation.

The refractory oxide may have a d90 of <100 micron. The refractory oxide may preferably have a d90 of < 75 micron, such as < 50 micron (e.g. < 30 micron), and more preferably < 20 micron. When the refractory oxide has a smaller d90, better packing and adhesion can be obtained. For the avoidance of doubt, the d90 measurements may be obtained by Laser Diffraction Particle Size Analysis using a Malvern Mastersizer 2000, which is a volume-based technique (i.e. D90 may also be referred to as D_{V}90 (or D(v,0.90)) and applying a mathematical Mie theory model to determine a particle size distribution.

Typically, the refractory oxide has a d90 of > 0.1 micron. It is preferred that the refractory oxide has a d90 of >1.0 micron, such as > 5.0 micron.

The refractory oxide comprises at least 65 % by weight of zirconia (ZrO₂), preferably at least 70 % by weight, and more preferably at least 80 % by weight of zirconia (e.g. at least 90 % by weight of zirconia).

It is preferred that the refractory oxide comprises less than 15 % by weight of ceria, and even more preferably less than 10 % by weight of ceria.

Typically, the refractory oxide is substantially free of ceria. More preferably, the refractory oxide does not comprise ceria.

The refractory oxide may further comprise an oxide of neodymium (e.g. Nd₂O₃), an oxide of lanthanum (e.g. La₂O₃), an oxide of hafnium (e.g. HfO₂), an oxide of yttrium (e.g. Y₂O₃) and/or an oxide of praseodymium (e.g. Pr₂O₃, PrO₂, and/or Pr₆O₁₁). These oxides may provide a stabilising function to the refractory oxide. Some these oxides may also be present as impurities in the refractory oxide.

It may be preferable that the refractory oxide further comprises an oxide of neodymium (e.g. Nd₂O₃). The refractory oxide may further comprise 1 to 20 % by weight of an oxide of neodymium (e.g. Nd₂O₃), preferably 2.5 to 15 % by weight (e.g. 5 to 15 % by weight), such as 5 to 10 % by weight.

The refractory oxide may consist essentially of zirconia.

For the avoidance of doubt, the Pt-alloying metal does not comprise platinum (e.g. when new or unused).

It is preferred that the particles of the Pt-alloying metal have a mean particle size ≤ about 20 nm (e.g. < about 20 nm), such as a mean particle size ≤ 15 nm (e.g. < about 15 nm), more preferably ≤ about 10 nm (e.g. < about 10 nm), especially ≤ 8 nm (e.g. < about 8 nm).

The particles of the Pt-alloying metal particles typically have a dispersion of > about 10 %, preferably ≥ 15 % (e.g. 15 to 35 %), such as ≥ 20 % (e.g. 20 to 30 %). The measurement of the dispersion refers to unused Pt-alloying metal particles (i.e. fresh particles, which have not been subjected to repeated or prolonged use).

The "mean particle size" and the "dispersion" as used herein with reference to the Pt-alloying metal, particularly when the Pt-alloying metal is palladium, can be determined by CO chemisorption, as follows. The Pt-alloying metal content can be measured by Inductively Coupled Plasma Optical Emission Spectroscopy (ICP-OES). The CO uptake of the sample can be measured using a Micromeritics Autochem 2920 instrument. The sample is pre-treated with hydrogen gas at 300°C. Carbon monoxide uptake is measured by pulse chemisorption at 50°C. The Pt-alloying metal particle size can then be calculated using Autochem 2920 software based on the CO uptake and S-trapping metal content for the sample. A chemisorption ratio for CO: Pd of 1:1 is used in the calculation.

The dispersion of the Pt-alloying metal is a measurement of the particle size of the Pt-alloying metal. Large particles with a low surface area have a low dispersion.

Generally, the capture material or capture zone has a total loading of Pt-alloying metal (e.g. the metal content of the Pt-alloying metal) of 0.035 to 1.77 g/L (1 g ft⁻³ to 50 g ft⁻³), preferably 0.14 to 1.41 g/L (4 g ft⁻³ to 40 g ft⁻³), even more preferably 0.28 to 1.06 g/L (8 g ft⁻³ to 30 g ft⁻³).

The Pt-alloying metal is disposed or supported on the refractory oxide. The Pt-alloying metal may be disposed directly onto or is directly supported by the refractory oxide (e.g. there is no intervening support material between the Pt-alloying metal and the refractory oxide). For example, the palladium Pt-alloying metal can be dispersed on a surface of and/or impregnated into the refractory oxide.

Typically, the refractory oxide is not a material that promotes the catalytic activity of the Pt-alloying metal, particularly when the Pt-alloying metal comprises palladium (e.g. the catalytic activity of the palladium in the oxidation of CO and/or unburned HCs).

At least one particle of the Pt-alloying metal may be disposed or supported on at least one particle of the refractory oxide. Preferably, a plurality of particles of Pt-alloying metal are disposed or supported on at least one particle of the refractory oxide. More preferably, there is a plurality of particles of the refractory oxide, wherein a plurality of particles of Pt-alloying metal are disposed or supported on each particle of the refractory oxide.

For the avoidance of doubt, the capture material and the catalytic material have different compositions.

Generally, the catalytic material comprises platinum (Pt) disposed or supported on a support material (referred to herein as the support material of the catalytic material or "CM support material"). The platinum may be disposed directly onto or is directly supported by the support material (e.g. there is no intervening support material between the platinum and the support material). For example, platinum can be dispersed over a surface of and/or impregnated within the support material.

The CM support material comprises, or consists essentially of, a refractory oxide (referred to herein as the refractory oxide of the catalytic material). Particles of the refractory oxide typically have a mean specific surface area ≥ 75 m²/g, such as ≥ 85 m²/g, and preferably ≥ 100 m²/g.

The refractory oxide of the CM support material is typically selected from the group consisting of alumina, silica, titania, ceria and a mixed or composite oxide thereof. For example, the refractory oxide may be selected from the group consisting of alumina, silica, titania, ceria, silica-alumina, titania-alumina, zirconia-alumina, ceria-alumina, titania-silica, zirconia-silica, zirconia-titania, ceria-zirconia and alumina-magnesium oxide.

When the CM support material or the refractory oxide thereof, comprises or consists essentially of a mixed or composite oxide of alumina (e.g. silica-alumina, alumina-magnesium oxide or a mixture of alumina and ceria), then preferably the mixed or composite oxide of alumina comprises at least 50 to 99 % by weight of alumina, more preferably 70 to 95 % by weight of alumina, even more preferably 75 to 90 % by weight of alumina.

When the CM support material or the refractory oxide thereof, comprises or consists essentially of ceria-zirconia, then the ceria-zirconia may consist essentially of 20 to 95 % by weight of ceria and 5 to 80 % by weight of zirconia (e.g. 50 to 95 % by weight ceria and 5 to 50 % by weight zirconia), preferably 35 to 80 % by weight of ceria and 20 to 65 % by weight zirconia (e.g. 55 to 80 % by weight ceria and 20 to 45 % by weight zirconia), even more preferably 45 to 75 % by weight of ceria and 25 to 55 % by weight zirconia.

The CM support material or the refractory oxide thereof may optionally be doped (e.g. with a dopant). The dopant may be selected from the group consisting of zirconium (Zr), titanium (Ti), silicon (Si), yttrium (Y), lanthanum (La), praseodymium (Pr), samarium (Sm), neodymium (Nd) and an oxide thereof.

When the CM support material or the refractory oxide thereof is doped, the total amount of dopant is 0.25 to 5 % by weight, preferably 0.5 to 3 % by weight (e.g. about 1 % by weight).

The CM support material or the refractory oxide thereof may comprise or consist essentially of alumina doped with a dopant. It is particularly preferred that the CM support material or the refractory oxide thereof comprises, or consists essentially of, alumina doped with a dopant when the catalytic material comprises an alkaline earth metal, preferably when the oxidation catalyst is a diesel oxidation catalyst (DOC) or a catalysed soot filter (CSF).

The alumina may be doped with a dopant comprising silicon (Si), magnesium (Mg), barium (Ba), lanthanum (La), cerium (Ce), titanium (Ti), or zirconium (Zr) or a combination of two or more thereof. The dopant may comprise, or consist essentially of, an oxide of silicon, an oxide of magnesium, an oxide of barium, an oxide of lanthanum, an oxide of cerium, an oxide of titanium or an oxide of zirconium. Preferably, the dopant comprises, or consists essentially of, silicon, magnesium, barium, cerium, or an oxide thereof, particularly silicon, or cerium, or an oxide thereof. More preferably, the dopant comprises, or consists essentially of, silicon, magnesium, barium, or an oxide thereof; particularly silicon, magnesium, or an oxide thereof; especially silicon or an oxide thereof.

Examples of alumina doped with a dopant include alumina doped with silica, alumina doped with magnesium oxide, alumina doped with barium or barium oxide, alumina doped with lanthanum oxide, or alumina doped with ceria, particularly alumina doped with silica, alumina doped with lanthanum oxide, or alumina doped with ceria. It is preferred that the alumina doped with a dopant is alumina doped with silica, alumina doped with barium or barium oxide, or alumina doped with magnesium oxide. More preferably, the alumina doped with a dopant is alumina doped with silica or alumina doped with magnesium oxide. Even more preferably, the alumina doped with a dopant is alumina doped with silica.

When the alumina is alumina doped with silica, then the alumina is doped with silica in a total amount of 0.5 to 45 % by weight (i.e. % by weight of the alumina), preferably 1 to 40 % by weight, more preferably 1.5 to 30 % by weight (e.g. 1.5 to 10 % by weight), particularly 2.5 to 25 % by weight, more particularly 3.5 to 20 % by weight (e.g. 5 to 20 % by weight), even more preferably 4.5 to 15 % by weight.

When the alumina is alumina doped with magnesium oxide, then the alumina is doped with magnesium oxide in an amount as defined above or an amount of 1 to 40 % by weight (i.e. % by weight of the alumina), such as 5 to 28 % by weight. More preferably, the alumina is doped with magnesium oxide in amount of 10 to 25 % by weight.

Alternatively or additionally, the CM support material or refractory oxide thereof may comprise, or consist essentially of, an alkaline earth metal aluminate. The term "alkaline earth metal aluminate" generally refers to a compound of the formula MAl₂O₄ where "M" represents the alkaline earth metal, such as Mg, Ca, Sr or Ba. Such compounds may comprise a spinel structure.

Typically, the alkaline earth metal aluminate is magnesium aluminate (MgAl₂O₄), calcium aluminate (CaAl₂O₄), strontium aluminate (SrAl₂O₄), barium aluminate (BaAl₂O₄), or a mixture of two or more thereof. Preferably, the alkaline earth metal aluminate is magnesium aluminate (MgAl₂O₄).

In the oxidation catalyst, the catalytic material may comprise a single platinum group metal (PGM), which is platinum (e.g. the catalytic material comprises platinum as the only platinum group metal).

Alternatively, depending on the application of the oxidation catalyst, the catalytic material may comprise (i) platinum (Pt), and (ii) palladium (Pd) and/or rhodium (Rh).

In general, when the catalytic region or the catalytic material thereof comprises Pt and Pd (and optionally Rh), then typically the ratio by mass of Pt to Pd is ≥ 1:1. The catalytic material may comprise Pt and optionally Pd, such that the ratio by mass of Pt to Pd is from 1:0 to 1:1. It has been found that volatilisation of platinum occurs when the catalytic material is relatively Pt rich.

It is preferred that when the catalytic material comprises Pt and Pd (and optionally Rh), then the ratio by mass of Pt to Pd is ≥ 1.5:1, more preferably ≥ 2:1 (e.g. ≥ 3:1), even more preferably ≥ 4:1, such as ≥ 10:1. The ratio by mass (i.e. mass ratio) of Pt to Pd is preferably 50:1 to 1:1, more preferably 30:1 to 2:1 (e.g. 25:1 to 4:1), even more preferably 20:1 to 5:1, such as 15:1 to 7.5:1.

Generally, when the catalytic material comprises Pt and Rh (and optionally Pd), then typically the ratio by mass of Pt to Rh is ≥ 1:1. The catalytic material may comprise Pt and optionally Rh, such that the ratio by mass of Pt to Rh is from 1:0 to 1:1. When the catalytic material comprises Pt and Rh (and optionally Pd), then preferably the ratio by mass of Pt to Rh is ≥ 1.5:1, more preferably ≥ 2:1 (e.g. ≥ 3:1), even more preferably ≥ 4:1, such as ≥ 10:1. The ratio by mass (i.e. mass ratio) of Pt to Rh is preferably 50:1 to 1:1, more preferably 30:1 to 2:1 (e.g. 25:1 to 4:1), even more preferably 20:1 to 5:1, such as 15:1 to 7.5:1.

If the catalytic material comprises Pd (and optionally Rh), then the catalytic material may comprise Pd disposed or supported on the CM support material. If Rh is also present, then the catalytic material may comprise Pd and Rh disposed or supported on the CM support material.

Typically, the oxidation catalyst has a total loading of PGM of 0.177 to 17.66 g/L (5 to 500 g ft⁻³). Preferably, the total loading of PGM is 0.353 to 14.13 g/L (10 to 400 g ft⁻³), more preferably 0.706 to 10.59 g/L (20 to 300 g ft⁻³), still more preferably, 0.882 to 8.83 g/L (25 to 250 g ft⁻³), and even more preferably 1.06 to 7.06 g/L (30 to 200 g ft⁻³).

In a first oxidation catalyst embodiment, the oxidation catalyst is a diesel oxidation catalyst (DOC), a diesel exotherm catalyst (DEC) or a passive NOₓ adsorber (PNA).

When the oxidation catalyst is a diesel oxidation catalyst (DOC), a diesel exotherm catalyst (DEC), a passive NOₓ adsorber (PNA), a cold start concept (CSC^{™}) catalyst or an ammonia slip catalyst (ASC), then typically the oxidation catalyst or the catalytic material thereof has a total loading of PGM is 0.706 to 7.06 g/L (20 to 200 g ft⁻³), more preferably 1.41 to 5.65 g/L (40 to 160 g ft⁻³).

When the oxidation catalyst is a diesel oxidation catalyst (DOC), a diesel exotherm catalyst (DEC), a passive NOₓ adsorber (PNA), a cold start concept (CSC^{™}) catalyst or an ammonia slip catalyst (ASC), then preferably the oxidation catalyst or the catalytic material thereof does not comprise rhodium (Rh). The catalytic material may comprise platinum (Pt) or platinum (Pt) and palladium (Pd), typically as the only platinum group metals (PGMs).

When the oxidation catalyst is a diesel oxidation catalyst (DOC) or a diesel exotherm catalyst (DEC), it is preferred that the refractory oxide comprises alumina, such as alumina optionally doped with a dopant (e.g. where the dopant comprises silicon or an oxide thereof, or the dopant is silica) or a mixed or composite oxide of alumina (e.g. silica-alumina). Alternatively, the refractory oxide may consist essentially of alumina.

The catalytic material in the first oxidation catalyst embodiment may further comprise a catalyst promoter. The catalyst promoter may comprise, or consist essentially of, an alkaline earth metal. The alkaline earth metal may be selected from the group consisting of magnesium (Mg), calcium (Ca), strontium (Sr), barium (Ba) and a combination of two or more thereof. It is preferred that the alkaline earth metal is calcium (Ca), strontium (Sr), or barium (Ba), more preferably strontium (Sr) or barium (Ba), and most preferably the alkaline earth metal is barium (Ba).

Generally, the catalytic material comprises a total amount of the alkaline earth metal of 0.353 to 17.7 g/L (10 to 500 g ft⁻³) (e.g. 2.19 to 14.1 g/L (60 to 400 g ft⁻³) or 0.353 to 15.9 g/L (10 to 450 g ft⁻³), particularly 0.706 to 14.1 g/L (20 to 400 g ft⁻³), more particularly 1.23 to 12.4 g/L (35 to 350 g ft⁻³), such as 1.77 to 10.6 g/L (50 to 300 g ft⁻³), especially 2.65 to 8.8 g/L (75 to 250 g ft⁻³).

Typically, the catalyst promoter (e.g. alkaline earth metal) and platinum (and optionally palladium) are supported on the CM support material.

In a second oxidation catalyst embodiment, the oxidation catalyst is a NOₓ storage catalyst (NSC).

When the oxidation catalyst is a NOₓ storage catalyst (NSC), then preferably the oxidation catalyst or the catalytic material thereof may comprise:
(a) platinum (Pt) and palladium (Pd), preferably Pt and Pd as the only PGMs; or
(b) platinum (Pt) and rhodium (Rh), preferably Pt and Rh as the only PGMs; or
(c) platinum (Pt), palladium (Pd) and rhodium (Rh), preferably Pt, Pd and Rh as the only PGMs.

When the oxidation catalyst is a NOₓ storage catalyst (NSC), then preferably the oxidation catalyst or the catalytic material thereof has a total loading of PGM is 0.706 to 7.06 g/L (20 to 200 g ft⁻³), more preferably 1.41 to 5.65 g/L (40 to 160 g ft⁻³).

If the catalytic material comprises Pd, then the Pd may be disposed or supported on the CM support material.

In the second oxidation catalyst embodiment, it is preferred that the CM support comprises, or consists essentially of, a refractory oxide selected from the group consisting of alumina-magnesium oxide (e.g. a mixed or composite oxide thereof), alumina doped with magnesium oxide and magnesium aluminate (MgAl₂O₄). More preferably, the refractory oxide is selected from the group consisting of alumina-magnesium oxide (e.g. a mixed or composite oxide thereof) and alumina doped with magnesium oxide. The alumina-magnesium oxide or the alumina doped with magnesium oxide comprise magnesium oxide in an amount of 1 to 40 % by weight (i.e. % by weight of the alumina), such as 5 to 28 % by weight. More preferably, the alumina is doped with magnesium oxide in amount of 10 to 25 % by weight.

When the oxidation catalyst is a NOₓ storage catalyst (NSC), then typically the oxidation catalyst or the catalytic material thereof comprises a NOₓ storage component.

The NOₓ storage component comprises an alkaline earth metal selected from the group consisting of magnesium (Mg), calcium (Ca), strontium (Sr), barium (Ba) and a combination of two or more thereof. It is preferred that the alkaline earth metal is calcium (Ca), strontium (Sr), or barium (Ba), more preferably strontium (Sr) or barium (Ba), and most preferably the alkaline earth metal is barium (Ba).

Typically, the NOₓ storage component consists of an oxide, a carbonate or a hydroxide of the alkaline earth metal.

When the oxidation catalyst is a NOₓ storage catalyst (NSC), then typically the oxidation catalyst or the catalytic material thereof comprises a total amount of NOₓ storage component (e.g. alkaline earth metal) of 3.53 to 211.9 g/L (100 to 6000 g ft⁻³), preferably 8.82 to 31.8 g/L (250 to 900 g ft⁻³) (e.g. 8.83 to 17.7 g/L (250 to 500 g ft⁻³)), particularly 10.6 to 30.0 g/L (300 to 850 g ft⁻³) (e.g. 10.6 to 15.9 g/L (300 to 450 g ft⁻³)), more particularly 14.1 to 28.3 g/L (400 to 800 g ft⁻³), such as 15.9 to 21.2 g/L (450 to 600 g ft⁻³). In some circumstances, the CM support material and/or the NSC support material may provide some NOₓ storage activity, such as when the support material comprises ceria. For the avoidance of doubt, the total amount of NOₓ storage component typically does not include the amount of the CM support material and/or the amount of the NSC support material.

The NOₓ storage component may be disposed or supported on the CM support material.

The oxidation catalyst or the catalytic material thereof may further comprise a NOₓ storage component support material (referred to herein as "NSC support material"). In addition or as an alternative to disposing or supporting the NOₓ storage component on the CM support material, the NOₓ storage component may be disposed or supported on the NSC support material.

The NSC support material comprises, or consists essentially of, refractory oxide, such as a refractory oxide selected from the group consisting of ceria and a mixed or composite oxide thereof. The mixed or composite oxide of ceria may be selected from the group consisting of ceria-alumina and ceria-zirconia. It is preferred that the refractory oxide is selected from the group consisting of ceria and ceria-zirconia.

When the NSC support material or the refractory oxide thereof, comprises or consists essentially of ceria-zirconia, then the ceria-zirconia may consist essentially of 20 to 95 % by weight of ceria and 5 to 80 % by weight of zirconia (e.g. 50 to 95 % by weight ceria and 5 to 50 % by weight zirconia), preferably 35 to 80 % by weight of ceria and 20 to 65 % by weight zirconia (e.g. 55 to 80 % by weight ceria and 20 to 45 % by weight zirconia), even more preferably 45 to 75 % by weight of ceria and 25 to 55 % by weight zirconia.

The oxidation catalyst (including the first and second oxidation catalyst embodiments) or the catalytic material thereof may further comprise a zeolite. It is preferred that the zeolite is a medium pore zeolite (e.g. a zeolite having a maximum ring size of ten tetrahedral atoms) or a large pore zeolite (e.g. a zeolite having a maximum ring size of twelve tetrahedral atoms). Examples of suitable zeolites or types of zeolite include faujasite, clinoptilolite, mordenite, silicalite, ferrierite, zeolite X, zeolite Y, ultrastable zeolite Y, AEI zeolite, ZSM-5 zeolite, ZSM-12 zeolite, ZSM-20 zeolite, ZSM-34 zeolite, CHA zeolite, SSZ-3 zeolite, SAPO-5 zeolite, offretite, a beta zeolite or a copper CHA zeolite. The zeolite is preferably ZSM-5, a beta zeolite or a Y zeolite.

Typically, the zeolite has a silica to alumina molar ratio of at least 25:11, preferably at least 25 :1, with useful ranges of from 25:1 to 1000:1, 50:1 to 500:1 as well as 25:1 to 100:1, 25:1 to 300:1, from 100:1 to 250:1.

When the oxidation catalyst or catalytic material thereof comprises a zeolite, then typically the total loading of zeolite is 3.05 to 183.1 g/L (0.05 to 3.00 g in⁻³), particularly 6.10 to 122.1 g/L (0.10 to 2.00 g in⁻³), more particularly 12.2 to 48.8 g/L (0.2 to 0.8 g in⁻³).

In general, the oxidation catalyst comprises a region comprising the catalytic material. The region comprising the catalytic material is referred to herein as the "catalytic region". The catalytic region is typically disposed or supported on the substrate. The catalytic region may be disposed directly on to the substrate (i.e. the catalytic region is in contact with a surface of the substrate).

The capture zone may be:
(a) disposed or supported on the catalytic region; and/or
(b) disposed directly on to the substrate [i.e. the capture zone is in contact with a surface of the substrate]; and/or
(c) in contact with the catalytic region [i.e. the capture zone is adjacent to, or abuts, the catalytic region].

In general, the capture zone is disposed or supported on a plurality of channel walls of the substrate (i.e. each channel wall within the substrate).

The oxidation catalyst for use in the exhaust system of the invention also comprises a zone comprising the capture material, which is arranged to contact the exhaust gas after the exhaust gas has contacted and/or passed through the catalytic material. A region comprising the capture material is referred to herein as the "capture zone".

Generally, the capture zone is arranged to contact the exhaust gas as it leaves the oxidation catalyst. The catalytic region may be arranged or oriented to contact exhaust gas before the capture zone. In the first to third arrangements of the oxidation catalyst for use in the invention, the capture zone is arranged to contact the exhaust gas as it leaves the oxidation catalyst and the catalytic region is arranged or oriented to contact exhaust gas before the capture zone.

The capture zone is disposed or supported at an outlet end of the substrate.

In general, the capture zone has a length of ≥ 12.7 mm (≥ 0.5 inch), preferably ≥ 25.4 mm (≥ 1 inch). This length of the capture zone is independent of the length of the substrate.

According to the invention, the capture zone has a length of 15 to 30 % of the length of the substrate.

In a first arrangement of the oxidation catalyst of the invention (including the first and second oxidation catalyst embodiments), the catalytic region is disposed or supported upstream of the capture zone. Preferably, the catalytic region is a catalytic zone. More preferably, the catalytic zone is disposed or supported at or near an inlet end of the substrate.

Typically, the catalytic zone has a length of 10 to 90 % of the length of the substrate (e.g. 50 to 90 %), preferably 15 to 80 % of the length of the substrate (e.g. 55 to 80 %), more preferably 20 to 75 % (e.g. 30 to 65 %) of the length of the substrate, still more preferably 30 to 65 %.

The catalytic zone may adjoin the capture zone. Preferably, the catalytic zone is in contact with the capture zone. When the catalytic zone adjoins the capture zone or the catalytic zone is in contact with the capture zone, then the catalytic zone and the capture zone may be disposed or supported on the substrate as a layer (e.g. a single layer). Thus, a layer (e.g. a single) may be formed on the substrate when the catalytic and capture zones adjoin or are in contact with one another. Such an arrangement may avoid problems with back pressure.

The catalytic zone may be separate from the capture zone. There may be a gap (e.g. a space) between the catalytic zone and the capture zone.

The capture zone may overlap the catalytic zone. An end portion or part of the capture zone may be disposed or supported on the catalytic zone. The capture zone generally only partly overlaps the catalytic zone.

In a second oxidation catalyst arrangement of the invention (including the first and second oxidation catalyst embodiments), the catalytic region is a catalytic layer. It is preferred that the catalytic layer extends for substantially an entire length of the substrate, particularly the entire length of the channels of a monolith substrate.

The capture zone is typically disposed or supported on the catalytic layer. Preferably the capture zone is disposed directly on to the catalytic layer (i.e. the capture zone is in contact with a surface of the catalytic layer).

When the capture zone is disposed or supported on the catalytic layer, it is preferred that the entire length of the capture zone is disposed or supported on the catalytic layer. The length of the capture zone is less than the length of the catalytic layer.

In a third oxidation catalyst arrangement (including the first and second oxidation catalyst embodiments), the capture zone arranged to contact the exhaust gas after the exhaust gas has contacted and/or passed through the catalytic material is a capture material disposed or supported on the outlet end surface (i.e. of the substrate). Thus, the oxidation catalyst comprises: a substrate having an inlet end surface and an outlet end surface; the catalytic material disposed on the substrate; and a capture material, wherein the capture material is disposed or supported on the outlet end surface (i.e. of the substrate).

The third oxidation catalyst arrangement provides a cost-effective solution of reducing or preventing volatilised platinum from escaping a platinum-containing oxidation catalyst (which can also avoid decreasing the amount of NO₂ that has been generated by the catalyst) because it does not require the use of large quantities of expensive materials, such as noble metals or rare earth metals.

The capture material may be directly disposed or supported onto the outlet end surface of the substrate (e.g. the capture material is in contact with the outlet end surface of the substrate).

In the third oxidation catalyst arrangement (including the first to third oxidation catalyst embodiment), then preferably the oxidation catalyst has a total loading of Pt-alloying metal (e.g. the metal content of the Pt-alloying metal) of 0.035 to 17.66 g/L (1 g ft⁻³ to 500 g ft⁻³) (e.g. 1.77 to 14.13 g/L (50 to 400 g ft⁻³)), preferably 0.14 to 8.83 g/L (4 g ft⁻³ to 250 g ft⁻³) (e.g. 2.65 to 8.83 g/L (75 to 250 g ft⁻³)), even more preferably 0.28 to 5.3 g/L (8 g ft⁻³ to 150 g ft⁻³) (e.g. 3.53 to 5.30 g/L (100 to 150 g ft⁻³)). The capture material can occupy a relatively small volume of the substrate and it may be necessary for a high loading of the Pt-alloying metal to be present.

The palladium Pt-alloying metal, may be disposed or supported on an outlet end surface of the substrate (e.g. the palladium Pt-alloying metal is directly coated onto the outlet end surface of the substrate).

The capture material is disposed or supported on an outlet end surface of the substrate (e.g. the downstream, end face of the substrate). The outlet end surface of a substrate typically comprises a plurality of channel wall edges.

The outlet end surface of the substrate may be planar (e.g. as in conventional honeycomb substrates) or non-planar. When the outlet end surface of the substrate is non-planar, then the outlet end surface may have a three-dimensional topographical configuration. Examples of substrates having a non-planar end surface are described in US 8,257,659. Substrates having non-planar end surfaces may provide a larger surface area for the capture material to trap volatilised platinum than substrates having planar end surfaces.

In general, it is preferred that the outlet end surface of the substrate is planar.

In addition to being disposed or supported on an outlet end surface of the substrate, the capture material is disposed or supported on a plurality of channel walls within the substrate. During application of the capture material, some of the capture material enters the channels of the substrate thereby partially coating the channel walls within the substrate. Capture material disposed or supported on a plurality of channel walls within the substrate comprises a capture zone, wherein the capture zone comprises, or consists essentially of, the capture material.

According to the invention, the capture zone has a mean length (e.g. from the outlet end surface of the substrate) of ≤ 20 mm, such as ≤ 15 mm, more preferably ≤ 10 mm (e.g. ≤ 5 mm), and even more preferably ≤ 3 mm (e.g. < 3 mm). For the avoidance of doubt, the mean length refers to a length in the axial direction of the substrate.

In general, the oxidation catalyst comprises a catalytic material disposed on the substrate. The catalytic material is disposed or supported on a plurality of channel walls within the substrate.

When the oxidation catalyst of the invention is a diesel oxidation catalyst (DOC), a diesel exotherm catalyst (DEC), passive NOₓ adsorber (PNA), a NOₓ storage catalyst (NSC), a CSC^{™} catalyst or an ASC, then the oxidation catalyst may have the first, second or third oxidation catalyst arrangement above.

Substrates for supporting oxidation catalysts are well known in the art. Methods for making washcoats to apply the catalytic material or capture material onto a substrate and methods for applying washcoats onto a substrate are also known in the art (see, for example, our WO 99/47260, WO 2007/077462 and WO 2011/080525).

The substrate typically has a plurality of channels (e.g. for the exhaust gas to flow through). Generally, the substrate is a ceramic material or a metallic material.

It is preferred that the substrate is made or composed of cordierite (SiO₂-Al₂O₃-MgO), silicon carbide (SiC), Fe-Cr-Al alloy, Ni-Cr-Al alloy, or a stainless-steel alloy.

The substrate of the oxidation catalyst for use in the invention is a monolith (also referred to herein as a monolith substrate), specifically a flow-through monolith substrate. Such monolith substrates are well-known in the art.

A flow-through monolith substrate typically comprises a honeycomb monolith (e.g. a metal or ceramic honeycomb monolith) having a plurality of channels extending therethrough, which channels are open at both ends. When the substrate is a flow-through monolith substrate, then the oxidation catalyst of the invention is typically a diesel oxidation catalyst (DOC), a NOₓ storage catalyst (NSC), a passive NOₓ adsorber (PNA), a diesel exotherm catalyst (DEC), a cold start concept (CSC^{™}) catalyst or an ammonia slip catalyst (ASC).

In principle, the substrate may be of any shape or size. However, the shape and size of the substrate is usually selected to optimise exposure of the catalytically active materials in the catalyst to the exhaust gas. The substrate may, for example, have a tubular, fibrous or particulate form. Examples of suitable supporting substrates include a substrate of the monolithic honeycomb cordierite type, a substrate of the monolithic honeycomb SiC type, a substrate of the layered fibre or knitted fabric type, a substrate of the foam type, a substrate of the crossflow type, a substrate of the metal wire mesh type, a substrate of the metal porous body type and a substrate of the ceramic particle type.

The exhaust system may further comprise an injector for injecting a nitrogenous reductant, such as ammonia, or an ammonia precursor, such as urea or ammonium formate, preferably urea, into exhaust gas upstream of the SCR catalyst or the SCRF^{™} catalyst. Typically, the injector is downstream of the oxidation catalyst. Such an injector may be fluidly linked to a source (e.g. a tank) of a nitrogenous reductant precursor. Valve-controlled dosing of the precursor into the exhaust gas may be regulated by suitably programmed engine management means and closed loop or open loop feedback provided by sensors monitoring the composition of the exhaust gas. Ammonia can also be generated by heating ammonium carbamate (a solid) and the ammonia generated can be injected into the exhaust gas.

Alternatively or in addition to the injector, ammonia can be generated in situ (e.g. during rich regeneration of a NSC disposed upstream of the SCR catalyst or the SCRF^{™} catalyst). Thus, the exhaust system may further comprise an engine management means for enriching the exhaust gas with hydrocarbons.

The SCR catalyst or the SCRF^{™} catalyst may comprise a metal selected from the group consisting of at least one of Cu, Hf, La, Au, In, V, lanthanides and Group VIII transition metals (e.g. Fe), wherein the metal is supported on a refractory oxide or molecular sieve. The metal is preferably selected from Ce, Fe, Cu and combinations of any two or more thereof, more preferably the metal is Fe or Cu.

The refractory oxide for the SCR catalyst or the SCRF^{™} catalyst may be selected from the group consisting of Al₂O₃, TiO₂, CeO₂, SiO₂, ZrO₂ and mixed oxides containing two or more thereof. The non-zeolite catalyst can also include tungsten oxide (e.g. V₂O₅/WO₃/TiO₂, WOₓ/CeZrO₂, WOₓ/ZrO₂ or Fe/WOₓ/ZrO₂).

It is particularly preferred when an SCR catalyst, an SCRF^{™} catalyst or a washcoat thereof comprises at least one molecular sieve, such as an aluminosilicate zeolite or a SAPO. The at least one molecular sieve can be a small, a medium or a large pore molecular sieve. By "small pore molecular sieve" herein we mean molecular sieves containing a maximum ring size of 8, such as CHA; by "medium pore molecular sieve" herein we mean a molecular sieve containing a maximum ring size of 10, such as ZSM-5; and by "large pore molecular sieve" herein we mean a molecular sieve having a maximum ring size of 12, such as beta. Small pore molecular sieves are potentially advantageous for use in SCR catalysts.

In the exhaust system of the invention, preferred molecular sieves for an SCR catalyst or an SCRF^{™} catalyst are synthetic aluminosilicate zeolite molecular sieves selected from the group consisting of AEI, ZSM-5, ZSM-20, ERI including ZSM-34, mordenite, ferrierite, BEA including Beta, Y, CHA, LEV including Nu-3, MCM-22 and EU-1, preferably AEI or CHA, and having a silica-to-alumina ratio of about 10 to about 50, such as about 15 to about 40.

In a first embodiment of the exhaust system of the invention, the exhaust system comprises the oxidation catalyst of the invention (e.g. as a DOC, a DEC, a NSC, a PNA, a CSC^{™} catalyst or an ASC) and a selective catalytic reduction filter (SCRF^{™}) catalyst. The oxidation catalyst of the invention is typically followed by (e.g. is upstream of) the selective catalytic reduction filter (SCRF^{™}) catalyst. A nitrogenous reductant injector may be arranged between the oxidation catalyst and the selective catalytic reduction filter (SCRF^{™}) catalyst. Thus, the oxidation catalyst may be followed by (e.g. is upstream of) a nitrogenous reductant injector, and the nitrogenous reductant injector may be followed by (e.g. is upstream of) the selective catalytic reduction filter (SCRF^{™}) catalyst.

In a second embodiment of the exhaust system of the invention, the exhaust system comprises the oxidation catalyst (e.g. as a DOC, a DEC, a NSC, a PNA, a CSC^{™} catalyst or an ASC) and a selective catalytic reduction (SCR) catalyst and optionally either a catalysed soot filter (CSF) or a diesel particulate filter (DPF).

In the second embodiment of the exhaust system of the invention, the oxidation catalyst is typically followed by (e.g. is upstream of) the selective catalytic reduction (SCR) catalyst. A nitrogenous reductant injector may be arranged between the oxidation catalyst and the selective catalytic reduction (SCR) catalyst. Thus, the oxidation catalyst may be followed by (e.g. is upstream of) a nitrogenous reductant injector, and the nitrogenous reductant injector may be followed by (e.g. is upstream of) the selective catalytic reduction (SCR) catalyst. The selective catalytic reduction (SCR) catalyst may be followed by (e.g. are upstream of) the catalysed soot filter (CSF) or the diesel particulate filter (DPF).

A third embodiment of the exhaust arrangement of the invention relates to an exhaust system comprising a diesel oxidation catalyst (DOC), the defined oxidation catalyst for use in the invention, and a selective catalytic reduction (SCR) catalyst. The diesel oxidation catalyst (DOC) is typically followed by (e.g. is upstream of) the oxidation catalyst of the invention. The oxidation catalyst of the invention is typically followed by (e.g. is upstream of) the selective catalytic reduction (SCR) catalyst. A nitrogenous reductant injector may be arranged between the oxidation catalyst and the selective catalytic reduction (SCR) catalyst. Thus, the oxidation catalyst may be followed by (e.g. is upstream of) a nitrogenous reductant injector, and the nitrogenous reductant injector may be followed by (e.g. is upstream of) the selective catalytic reduction (SCR) catalyst.

In any of the embodiments of the exhaust system described hereinabove, an ASC catalyst can be disposed downstream from the SCR catalyst or the SCRF^{™} catalyst (i.e. as a separate substrate monolith), or more preferably as a zone on a downstream or trailing end of the substrate monolith comprising the SCR catalyst can be used as a support for the ASC.

The specification further describes a vehicle. The vehicle comprises a compression ignition engine and an exhaust system of the invention. The compression ignition engine is preferably a diesel engine. The diesel engine may be a homogeneous charge compression ignition (HCCI) engine, a pre-mixed charge compression ignition (PCCI) engine or a low temperature combustion (LTC) engine. The diesel engine is a conventional (i.e. traditional) diesel engine.

The vehicle may be a light-duty diesel vehicle (LDV), such as defined in US or European legislation. A light-duty diesel vehicle typically has a weight of < 2840 kg, more preferably a weight of < 2610 kg.

In the US, a light-duty diesel vehicle (LDV) refers to a diesel vehicle having a gross weight of ≤ 3855.5 kg (≤ 8,500 pounds (US lbs)). In Europe, the term light-duty diesel vehicle (LDV) refers to (i) passenger vehicles comprising no more than eight seats in addition to the driver's seat and having a maximum mass not exceeding 5 tonnes, and (ii) vehicles for the carriage of goods having a maximum mass not exceeding 12 tonnes.

Alternatively, the vehicle may be a heavy-duty diesel vehicle (HDV), such as a diesel vehicle having a gross weight of > 3855.5 kg (> 8,500 pounds (US lbs)), as defined in US legislation.

### DEFINITIONS

The term "mixed oxide" as used herein generally refers to a mixture of oxides in a single phase, as is conventionally known in the art. The term "composite oxide" as used herein generally refers to a composition of oxides having more than one phase, as is conventionally known in the art.

The acronym "PGM" as used herein refers to "platinum group metal". The term "platinum group metal" generally refers to a metal selected from the group consisting of Ru, Rh, Pd, Os, Ir and Pt, preferably a metal selected from the group consisting of Ru, Rh, Pd, Ir and Pt. In general, the term "PGM" preferably refers to a metal selected from the group consisting of Rh, Pt and Pd.

The expression "end surface" as used herein, particularly with reference to an "inlet end surface" or an "outlet end surface", is synonymous with the expression "end face". The end surface or end face of a substrate is typically formed by the wall edges (e.g. at an exterior surface of the substrate) that define or bound the channels through the substrate.

The expression "Pt-alloying metal" as used herein refers to a material capable of forming an alloy with platinum (i.e. platinum metal), preferably when the temperature of the exhaust gas is < 900 °C, particularly < 800 °C, such as < 700 °C.

The expression "consist essentially" as used herein limits the scope of a feature to include the specified materials, and any other materials or steps that do not materially affect the basic characteristics of that feature, such as for example minor impurities. The expression "consist essentially of" embraces the expression "consisting of".

The expression "substantially free of" as used herein with reference to a material, typically in the context of the content of a washcoat region, a washcoat layer or a washcoat zone, means that the material in a minor amount, such as ≤ 5 % by weight, preferably ≤ 2 % by weight, more preferably ≤ 1 % by weight. The expression "substantially free of" embraces the expression "does not comprise".

The expression "about" as used herein with reference to an end point of a numerical range includes the exact end point of the specified numerical range. Thus, for example, an expression defining a parameter as being up to "about 0.2" includes the parameter being up to and including 0.2.

The term "selective catalytic reduction filter catalyst" as used herein includes a selective catalytic reduction formulation that has been coated onto a diesel particulate filter (SCR-DPF), which is known in the art.

### EXAMPLES

The invention will now be illustrated by the following non-limiting examples.

### Example 1 (Reference SCR catalyst)

### Preparation of substrate coated with 3 wt% Cu/CHA zeolite

Commercially available aluminosilicate CHA zeolite was added to an aqueous solution of Cu(NO₃)₂ with stirring. The slurry was filtered, then washed and dried. The procedure can be repeated to achieve a desired metal loading. The final product was calcined. After mixing, binders and rheology modifiers were added to form a washcoat composition.

A 62 cells per square cm (400 cpsi) cordierite flow-through substrate monolith was coated with an aqueous slurry of the 3wt% Cu/CHA zeolite sample using the method disclosed in WO 99/47260. This coated product (coated from one end only) is dried and then calcined and this process is repeated from the other end so that substantially the entire substrate monolith is coated, with a minor overlap in the axial direction at the join between the two coatings. The coated substrate monolith was aged in a furnace in air at 500°C for 5 hours. A core of 1 inch (2.54cm) diameter x 3 inches long (7.62cm) was cut from the finished article.

### Example 2 (Comparative)

Silica-alumina powder was slurried in water and milled to a d₉₀ < 20 micron. Barium acetate was added to the slurry followed by appropriate amounts of soluble platinum and palladium salts. Beta zeolite was added such that the slurry comprised 77% silica-alumina and 23% zeolite by mass. The slurry was then stirred to homogenise. The resulting washcoat was applied to the inlet channels of a cordierite flow through monolith having 62 cells per square cm (400 cells per square inch) using established coating techniques. The part was then dried.

A second slurry of silica-alumina was milled to a d₉₀ < 20 micron. Platinum nitrate solution was added followed by manganese nitrate solution. The mixture was stirred to homogenise. The slurry was applied to the outlet end of the substrate using established coating techniques. The part was then dried and calcined at 500°C. The resulting catalyst had a total PGM loading of 5.30 g/L (150 g ft⁻³) and a Pt:Pd weight ratio of 3:1. The Mn loading was 4.59 g/L (130 g ft⁻³).

### Example 3

Silica-alumina powder was slurried in water and milled to a d₉₀ < 20 micron. Barium acetate was added to the slurry followed by appropriate amounts of soluble platinum and palladium salts. Beta zeolite was added such that the slurry comprised 77% silica-alumina and 23% zeolite by mass. The slurry was then stirred to homogenise. The resulting washcoat was applied to the inlet channels of a cordierite flow through monolith having 62 cells per square cm (400 cells per square inch) using established coating techniques. The part was then dried.

A second slurry of silica-alumina was milled to a d₉₀ < 20 micron. Platinum nitrate solution was added followed by manganese nitrate solution. The mixture was stirred to homogenise. The slurry was applied to the outlet end of the substrate using established coating techniques. The part was then dried and calcined at 500°C. The resulting catalyst had a total PGM loading of 5.30 g/L (150 g ft⁻³) and a Pt:Pd weight ratio of 3:1. The Mn loading was 4.59 g/L (130 g ft⁻³).

A third slurry was prepared by adding stabilised-zirconia (13.5% Nd₂O₃ by weight) to water. Pd nitrate was added and the mixture stirred to homogenise. 10% alumina binder was added and the slurry was applied to the outlet channels of the substrate using established coating techniques to a coating depth of 2.54 cm (1 inch). The part was dried and calcined at 500°C. The stabilised-zirconia loading was 122.0 g/L (2.0 g in⁻³) and the Pd loading of this third coating was 0.706 g/L (20 g ft⁻³).

### Example 4

Silica-alumina powder was slurried in water and milled to a d₉₀ < 20 micron. Barium acetate was added to the slurry followed by appropriate amounts of soluble platinum and palladium salts. Beta zeolite was added such that the slurry comprised 77% silica-alumina and 23% zeolite by mass. The slurry was then stirred to homogenise. The resulting washcoat was applied to the inlet channels of a cordierite flow through monolith having 62 cells per square cm (400 cells per square inch) using established coating techniques. The part was then dried.

A second slurry of silica-alumina was milled to a d₉₀ < 20 micron. Platinum nitrate solution was added followed by manganese nitrate solution. The mixture was stirred to homogenise. The slurry was applied to the outlet end of the substrate using established coating techniques. The part was then dried and calcined at 500°C. The resulting catalyst had a total PGM loading of 5.30 g/L (150 g ft⁻³) and a Pt:Pd weight ratio of 3:1. The Mn loading was 4.59 g/L (130 g ft⁻³).

A third slurry was prepared by adding stabilised-zirconia (13.5% Nd₂O₃ by weight) to water. Pd nitrate was added and the mixture stirred to homogenise. Formic acid was added at 0.7% of the slurry by mass and the mixture stirred for 1 hour. During this time the slurry turned from yellow to grey as the Pd salt was reduced. 10% alumina binder was added and slurry was applied to the outlet channels of the substrate using established coating techniques to a coating depth of 2.54 cm (1 inch). The part was dried and calcined at 500°C. The stabilised-zirconia loading was 122.0 g/L (2.0 g in⁻³) and the Pd loading of this third coating was 0.706 g/L (20 g ft⁻³).

### Experimental Results

### System tests

Tests were performed on a first synthetic catalytic activity test (SCAT) laboratory reactor illustrated in Figure 1, in which an aged core of the coated Cu/CHA zeolite SCR catalyst of Example 1 was disposed in a conduit downstream of a core of the catalyst of Example 2, 3 or 4. A synthetic gas mixture was passed through the conduit at a rate of 6 litres per minute. A furnace was used to heat (or "age") the oxidation catalyst samples at steady-state temperature at a catalyst outlet temperature of 950°C for 2 hours. The SCR catalyst was disposed downstream of the oxidation catalyst sample and was held at a catalyst temperature of 300°C during the ageing process by adjusting the length of tube between the furnace outlet and the SCR inlet, although a water-cooled heat exchanger jacket could be used as appropriate. Temperatures were determined using appropriately positioned thermocouples (T₁ and T₂). The gas mixture used during the ageing was 40% air, 50% N₂, 10% H₂O.

A reference "blank ageing" sample was tested where there was no platinum containing oxidation catalyst placed upstream of the SCR core in the ageing apparatus. That is, the blank ageing was carried out in the absence of a platinum containing catalyst and hence platinum volatilisation could not occur.

Following the oxidation catalyst ageing, the SCR catalysts were removed from the first SCAT reactor and inserted into a second SCAT reactor specifically to test the NH₃-SCR activity of the aged samples. The SCR catalysts were then tested for SCR activity at 500°C using a synthetic gas mixture (O₂ = 10%; H₂O = 5%, CO₂ = 330ppm; NH₃ = 400ppm; NO = 500ppm; NO₂ = 0ppm; N₂ = balance, i.e. an alpha value of 0.8 was used (ratio of NH₃:NOₓ). The NOₓ conversion results are normalised and reported relative the SCR core from the blank ageing test. Normalised NOₓ conversion results are shown in Table 1.

**Table 1**

| Catalyst upstream of SCR core during lab ageing at 950°C | Normalised NOₓ conversion of SCR core at 500°C (%) |
|---|---|
| blank | 100 |
| 2 | 49 |
| 3 | 88 |
| 4 | 79 |

Table 1 shows the NOₓ conversion activity of aged SCR catalyst cores taken from Example 1 after ageing with upstream oxidation catalyst cores at 950°C for 2 hours. The NOₓ conversion at 500°C for the blank ageing run represents the baseline conversion that is achieved after ageing without platinum volatilisation.

The SCR sample that was aged with a core from Example 2 in the upstream location shows a significant reduction on NOₓ conversion. The catalyst of Example 2 has no platinum capture material. The SCR sample that was aged with a core from Example 3 in the upstream location shows only a slight reduction in NOₓ conversion performance compared to blank ageing run. The oxidation catalyst of Example 3 comprises a capture material that comprises zirconia. The capture material coating was prepared without the need to isolate material as a powder. The SCR sample that was aged with a core from Example 4 in the upstream location shows a similar NOₓ conversion performance to the SCR sample that was aged behind Example 3. Example 4 comprises a capture material that comprises zirconia and Pd that has been reduced using formic acid. The capture material coating was prepared without the need to isolate material as a powder.

### Measurement of catalytic activity

Core samples were taken from the catalysts of Examples 2, 3 and 4. The cores were hydrothermally aged at 790°C for 16 hours using 10% water.

The catalytic activity for all cores was determined using a synthetic gas bench catalytic activity test (SCAT). The aged cores were tested in the simulated exhaust gas mixture shown in Table 2. In each case the balance is nitrogen. The oxidation activity for NO is determined as the percentage conversion at 250°C. The oxidation activity for CO and HC is determined by the light off temperature whereby 50% conversion is achieved (T50).

**Table 2**

| | |
|---|---|
| CO | 1500 ppm |
| HC (as C₁) | 430 ppm |
| NO | 100 ppm |
| CO₂ | 4% |
| H₂O | 4% |
| O₂ | 14% |
| Space velocity | 55000/hour |

### Results

The results from the SCATs are shown in Tables 3 and 4.

**Table 3**

| Example No. | T50 CO (°C) | T50 HC (°C) |
|---|---|---|
| 2 | 148 | 153 |
| 3 | 149 | 153 |
| 4 | 150 | 155 |

**Table 4**

| Example No. | NO oxidation at 250°C (%) |
|---|---|
| 2 | 83 |
| 3 | 77 |
| 4 | 80 |

The results shown in Table 3 show the CO and HC light off temperatures for the catalysts of Examples 2, 3 and 4. All of the catalysts in the Examples have similar CO and HC light off activity. The catalysts of Examples 3 and 4 comprise a capture material that comprises zirconia. The inclusion of the capture material has no negative impact on CO and HC light off.

Table 4 shows the NO oxidation activity at 250°C. All of the catalysts of the Examples show a similar NO oxidation activity. Examples 3 and 4 comprise a capture material that comprises zirconia. The inclusion of the capture material has no negative impact on NO oxidation activity.

## Claims

1. An exhaust system for treating an exhaust gas produced by a compression ignition engine, wherein the exhaust system comprises an oxidation catalyst comprising:
a substrate which is a flow-through monolith substrate having an inlet end surface and an outlet end surface;
a catalytic material disposed on the substrate, wherein the catalytic material comprises platinum (Pt);
a capture zone comprising a capture material, wherein the capture material comprises a Pt-alloying metal, which is palladium (Pd), disposed or supported on a refractory oxide, which capture material is disposed or supported on a plurality of channel walls within the substrate, wherein the refractory oxide comprises particles thereof having a mean specific surface area ≥ 50 m²/g of at least 65 % by weight of zirconia and less than 20 % by weight of ceria, wherein the mean specific surface area is determined by nitrogen physisorption at -196°C using the volumetric method and using the BET adsorption isotherm equation,
wherein the capture zone has a mean length of ≤ 20 mm and 10 to 30% of the length of the substrate, is disposed on the outlet end surface of the substrate and is arranged to contact the exhaust gas after the exhaust gas has contacted and/or passed through the catalytic material comprising Pt; and
an emissions control device disposed downstream from the oxidation catalyst, which emissions control device is a selective catalytic reduction (SCR) catalyst or a SCR filter catalyst.

2. An exhaust system according to claim 1, wherein the refractory oxide in the oxidation catalyst comprises ≤ 5 % by weight ceria.

3. An exhaust system according to claim 1 or 2, wherein the refractory oxide in the oxidation catalyst comprises an oxide of neodymium, an oxide of lanthanum, an oxide of hafnium, an oxide of yttrium and/or an oxide of praseodymium.

4. An exhaust system according to claim 1 or 2, wherein the refractory oxide in the oxidation catalyst comprises 1 to 20 % by weight of an oxide of neodymium.

5. An exhaust system according to any one of the preceding claims, wherein the catalytic material in the oxidation catalyst comprises platinum (Pt) disposed or supported on a support material.

6. An exhaust system according to any one of the preceding claims, wherein the catalytic material in the oxidation catalyst comprises (i) platinum (Pt), and (ii) palladium (Pd) and/or rhodium (Rh).

7. An exhaust system according to any one of the preceding claims, wherein the catalytic material in the oxidation catalyst comprises Pt and Pd in a ratio by mass of Pt to Pd of ≥ 1:1.

8. An exhaust system according to any one of the preceding claims, wherein the catalytic material in the oxidation catalyst comprises Pt and Rh in ratio by mass of Pt to Rh of ≥ 1:1.

9. An exhaust system according to any one of the preceding claims, wherein the capture zone in the oxidation catalyst is disposed directly on to the substrate.

10. An exhaust system according to any one of the preceding claims, wherein the capture zone in the oxidation catalyst is in contact with the catalytic material.

11. An exhaust system according to any one of the preceding claims, wherein the catalytic material is disposed or supported upstream of the capture zone.

12. An oxidation catalyst according to any one of claims 1 to 10, wherein the catalytic material is a catalytic layer and the capture zone is disposed or supported on the catalytic layer.

13. An exhaust system according to any one of the preceding claims, wherein the oxidation catalyst is a diesel oxidation catalyst (DOC), a catalysed soot filter (CSF), a NOₓ storage catalyst (NSC), a passive NOₓ adsorber (PNA) or a diesel exotherm catalyst (DEC).

## Patentansprüche

1. Abgassystem zum Behandeln eines Abgases, das durch einen Kompressionszündungsmotor erzeugt wird, wobei das Abgassystem einen Oxidationskatalysator umfasst, umfassend:
ein Substrat, das ein Durchflussmonolithsubstrat ist, das eine Einlassendoberfläche und eine Auslassendoberfläche aufweist;
ein katalytisches Material, das auf dem Substrat angeordnet ist, wobei das katalytische Material Platin (Pt) umfasst;
eine Einfangzone, umfassend ein Einfangmaterial, wobei das Einfangmaterial ein Pt-Legierungsmetall umfasst, das Palladium (Pd) ist, das auf einem feuerfesten Oxid angeordnet ist oder getragen wird, wobei das Einfangmaterial auf einer Vielzahl von Kanalwänden innerhalb des Substrats angeordnet ist oder getragen wird, wobei das feuerfeste Oxid Partikel davon umfasst, die einen mittleren spezifischen Oberflächeninhalt von ≥ 50 m²/g von zu mindestens 65 Gew.-% Zirconiumdioxid und weniger als 20 Gew.-% Ceroxid aufweisen, wobei der mittlere spezifische Oberflächeninhalt durch Stickstoffphysisorption bei -196 °C unter Verwendung des volumetrischen Verfahrens und unter Verwendung der BET-Adsorptionsisothermgleichung bestimmt wird,
wobei die Einfangzone eine mittlere Länge von ≤ 20 mm und 10 bis 30 % der Länge des Substrats aufweist, auf der Auslassendoberfläche des Substrats angeordnet ist und eingerichtet ist, um das Abgas zu berühren, nachdem das Abgas das katalytische Material, umfassend Pt, berührt und/oder passiert hat; und
eine Emissionssteuerungsvorrichtung, die stromabwärts des Oxidationskatalysators angeordnet ist, wobei die Emissionssteuervorrichtung ein Katalysator für eine selektive katalytische Reduktion (SCR) oder ein SCR-Filterkatalysator ist.

2. Abgassystem nach Anspruch 1, wobei das feuerfeste Oxid in dem Oxidationskatalysator zu ≤ 5 Gew.-% Ceroxid umfasst.

3. Abgassystem nach Anspruch 1 oder 2, wobei das feuerfeste Oxid in dem Oxidationskatalysator ein Oxid von Neodym, ein Oxid von Lanthan, ein Oxid von Hafnium, ein Oxid von Yttrium und/oder ein Oxid von Praseodym umfasst.

4. Abgassystem nach Anspruch 1 oder 2, wobei das feuerfeste Oxid in dem Oxidationskatalysator zu 1 bis 20 Gew.-% ein Oxid von Neodym umfasst.

5. Abgassystem nach einem der vorstehenden Ansprüche, wobei das katalytische Material in dem Oxidationskatalysator Platin (Pt) umfasst, das auf einem Trägermaterial angeordnet ist oder getragen wird.

6. Abgassystem nach einem der vorstehenden Ansprüche, wobei das katalytische Material in dem Oxidationskatalysator (i) Platin (Pt) und (ii) Palladium (Pd) und/oder Rhodium (Rh) umfasst.

7. Abgassystem nach einem der vorstehenden Ansprüche, wobei das katalytische Material in dem Oxidationskatalysator Pt und Pd in einem Masseverhältnis von Pt zu Pd von ≥ 1 : 1 umfasst.

8. Abgassystem nach einem der vorstehenden Ansprüche, wobei das katalytische Material in dem Oxidationskatalysator Pt und Rh in dem Masseverhältnis von Pt zu Rh von ≥ 1 : 1 umfasst.

9. Abgassystem nach einem der vorstehenden Ansprüche, wobei die Einfangzone in dem Oxidationskatalysator direkt auf dem Substrat angeordnet ist.

10. Abgassystem nach einem der vorstehenden Ansprüche, wobei die Einfangzone in dem Oxidationskatalysator mit dem katalytischen Material in Berührung ist.

11. Abgassystem nach einem der vorstehenden Ansprüche, wobei das katalytische Material stromaufwärts der Einfangzone angeordnet ist oder getragen wird.

12. Oxidationskatalysator nach einem der Ansprüche 1 bis 10, wobei das katalytische Material eine katalytische Schicht ist und die Einfangzone auf der katalytischen Schicht angeordnet ist oder getragen wird.

13. Abgassystem nach einem der vorstehenden Ansprüche, wobei der Oxidationskatalysator ein Dieseloxidationskatalysator (DOC), ein katalysiertes Rußfilter (CSF), ein NOₓ-Speicherkatalysator (NSC), ein passiver NOₓ-Adsorber (PNA) oder ein Dieselexothermkatalysator (DEC) ist.

## Revendications

1. Système d'échappement permettant de traiter un gaz d'échappement produit par un moteur à allumage par compression, dans lequel le système d'échappement comprend un catalyseur d'oxydation comprenant :
un substrat qui est un substrat monolithique à flux continu ayant une surface d'extrémité d'entrée et une surface d'extrémité de sortie ;
un matériau catalytique disposé sur le substrat, dans lequel le matériau catalytique comprend du platine (Pt) ;
une zone de capture comprenant un matériau de capture, dans lequel le matériau de capture comprend un métal d'alliage de Pt, qui est du palladium (Pd), disposé ou supporté sur un oxyde réfractaire, lequel matériau de capture est disposé ou supporté sur une pluralité de parois de canaux à l'intérieur du substrat, dans lequel l'oxyde réfractaire comprend des particules de celui-ci ayant une surface spécifique moyenne ≥ 50 m²/g d'au moins 65 % en poids de zircone et moins de 20 % en poids d'oxyde de cérium, dans lequel la surface spécifique moyenne est déterminée par physisorption d'azote à -196 °C à l'aide de la méthode volumétrique et à l'aide de l'équation isotherme d'adsorption BET,
dans lequel la zone de capture a une longueur moyenne de ≤ 20 mm et 10 à 30 % de la longueur du substrat, est disposée sur la surface d'extrémité de sortie du substrat et est agencée pour venir en contact avec le gaz d'échappement après que le gaz d'échappement est entré en contact avec et/ou passé à travers le matériau catalytique comprenant Pt ; et
un dispositif de régulation d'émissions disposé en aval du catalyseur d'oxydation, lequel dispositif de régulation d'émissions est un catalyseur de réduction catalytique sélective (SCR) ou un catalyseur de filtre SCR.

2. Système d'échappement selon la revendication 1, dans lequel l'oxyde réfractaire dans le catalyseur d'oxydation comprend ≤ 5 % en poids d'oxyde de cérium.

3. Système d'échappement selon la revendication 1 ou 2, dans lequel l'oxyde réfractaire dans le catalyseur d'oxydation comprend un oxyde de néodyme, un oxyde de lanthane, un oxyde d'hafnium, un oxyde d'yttrium et/ou un oxyde de praséodyme.

4. Système d'échappement selon la revendication 1 ou 2, dans lequel l'oxyde réfractaire dans le catalyseur d'oxydation comprend 1 à 20 % en poids d'un oxyde de néodyme.

5. Système d'échappement selon l'une quelconque des revendications précédentes, dans lequel le matériau catalytique dans le catalyseur d'oxydation comprend du platine (Pt) disposé ou supporté sur un matériau de support.

6. Système d'échappement selon l'une quelconque des revendications précédentes, dans lequel le matériau catalytique dans le catalyseur d'oxydation comprend (i) du platine (Pt), et (ii) du palladium (Pd) et/ou du rhodium (Rh).

7. Système d'échappement selon l'une quelconque des revendications précédentes, dans lequel le matériau catalytique dans le catalyseur d'oxydation comprend Pt et Pd en un rapport en masse de Pt à Pd de ≥ 1:1.

8. Système d'échappement selon l'une quelconque des revendications précédentes, dans lequel le matériau catalytique dans le catalyseur d'oxydation comprend Pt et Rh en un rapport en masse de Pt à Rh de ≥ 1:1.

9. Système d'échappement selon l'une quelconque des revendications précédentes, dans lequel la zone de capture dans le catalyseur d'oxydation est disposée directement sur le substrat.

10. Système d'échappement selon l'une quelconque des revendications précédentes, dans lequel la zone de capture dans le catalyseur d'oxydation est en contact avec le matériau catalytique.

11. Système d'échappement selon l'une quelconque des revendications précédentes, dans lequel le matériau catalytique est disposé ou supporté en amont de la zone de capture.

12. Catalyseur d'oxydation selon l'une quelconque des revendications 1 à 10, dans lequel le matériau catalytique est une couche catalytique et la zone de capture est disposée ou supportée sur la couche catalytique.

13. Système d'échappement selon l'une quelconque des revendications précédentes, dans lequel le catalyseur d'oxydation est un catalyseur d'oxydation diesel (DOC), un filtre à suie catalysé (CSF), un catalyseur de stockage de NOₓ (NSC), un adsorbeur de NOₓ passif (PNA) ou un catalyseur exothermique diesel (DEC).
